# EUROPEAN PATENT SPECIFICATION

(11) **EP 3 043 006 B1**
(45) Date of publication and mention of the grant of the patent: **13.12.2017**
(21) Application number: 16150599.5
(22) Date of filing: 08.01.2016
(51) Int. Cl.: E04F 19/04, E04F 19/02

(54) **SEALING BEAD AND SEALING ARRANGEMENT**
DICHTUNGSWULST UND DICHTUNGSANORDNUNG
BOURRELET D'ÉTANCHÉITÉ ET AGENCEMENT D'ÉTANCHÉITÉ

(30) Priority: 09.01.2015 FI 20155012
(43) Date of publication of application: 13.07.2016
(73) Proprietor: Maler Oy, 84100 Yilvieska (FI)
(72) Inventor: OIKARI, Jani, 84100 Ylivieska (FI)
(74) Representative: Kolster Oy Ab

(56) References cited:
- DE-U1-202007 017 605
- GB-A- 2 420 370

## Description

### Background of the invention

The invention relates to sealing beads and sealing arrangements. An example of sealing beads is a floor moulding, i.e. a skirting, provided in the meeting angle between a wall and the floor at floor level. The role of an ordinary moulding or skirting is mainly a cosmetic one, providing a finished impression and preventing a lower edge of the wall from being damaged, whereas a sealing bead further enables harmful flows that may occur owing to gaps in a structure, such as a gap between for instance a floor and a wall, or a gap between a ceiling and a wall, to be diminished or prevented.

In addition to air flow, the sealing bead may be used for preventing moisture from flowing from the structure or its gaps to the room air, or vice versa. A sealing bead of the double-sided type is provided with a seal against both surfaces around an inner corner. Some known double-sided sealing beads are disclosed in documents DE1766707U and DE102011011079. In addition, a two-piece installation duct, with seals, for lines or pipes according to document US5274972 is known wherein, however, the seals are provided in the duct piece rather than in the capping which serves to cover it and which, as a separate piece, is to be mounted on the duct piece; and, furthermore, a sealing bead according to document US2006/0080771 is also known to be provided between a bathtub and a protective plate outlining the surroundings of the bathtub wherein the seals are stiff, non-flexible segmental pieces that by their grooves are supported and positioned in the protrusions of the fixing piece of the bead, the surfaces of the seals directly settling over their entire surface against the surface of the bathtub and the protective plate. The state of the art according to the preamble of claim 1 is known from the document GB 2 420 370.

The previously known sealing beads and sealing arrangements do not entirely meet the standards; the problem is perhaps poor adaptability to different targets since some targets may be considerably uneven in their shapes of edges of the surfaces (wall, floor, ceiling) surrounding the installation site.

### Brief description of the invention

An object of the invention is thus to provide a novel sealing bead and sealing arrangement so as to enable the aforementioned problems to be solved or alleviated. The object of the invention is achieved by a sealing bead and a sealing arrangement which are characterized by what is disclosed in the independent claims. Preferred embodiments of the invention are disclosed in the dependent claims.

An advantage of the sealing bead and sealing arrangement according to the invention is a good sealing capability even in difficult targets, and the sealing bead is also easy to install since the structure of the seal does not that much resist the installation of the sealing bead in place.

### Brief description of the figures

The invention is now described in closer detail in connection with preferred embodiments and with reference to the accompanying drawings, in which:
Figure 1 shows a sealing bead as seen obliquely from its top surface,

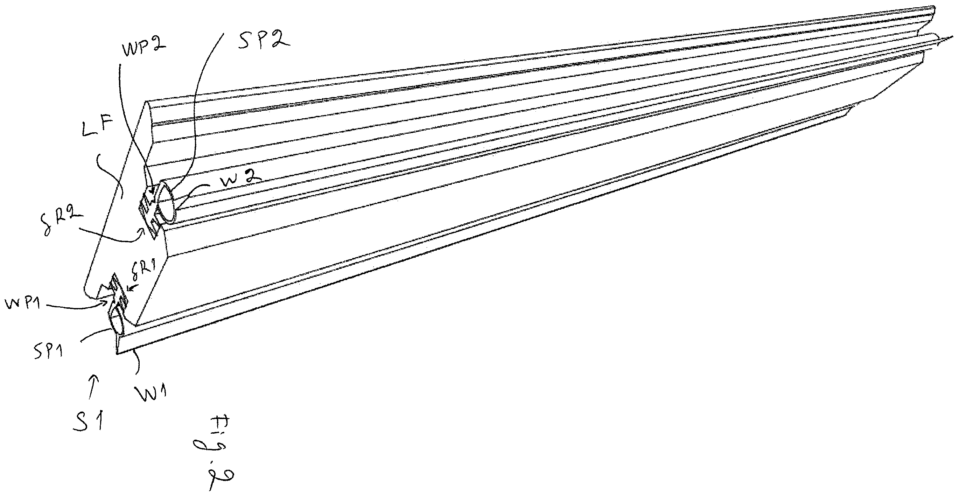

Figure 2 shows the sealing bead as seen obliquely from its inner surface,
Figures 3 to 7 show different phases in installing the sealing bead,
Figure 8 shows a bead frame of the sealing bead,
Figure 9 shows extreme positions of bending, i.e. twisting, of a seal in the sealing bead.

### Detailed description of the invention

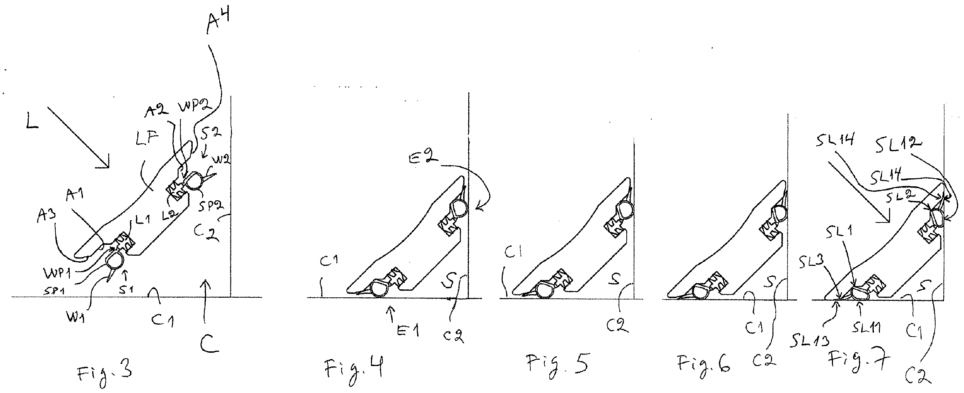

Referring to the figures, a sealing bead L is shown which comprises a bead frame LF as well as a first seal S1 and a second seal S2 fastened to the bead frame. Figures 3 to 7 show a bead installation target C, which is for instance a corner defined by surfaces C1 and C2. The sealing bead L is to be installed between the two surfaces C1, C2 located cornerwise with respect to one another. A specific purpose of the sealing bead is to prevent a flow of air, moisture or radon gas coming from a possible gap between surfaces. In particular, the sealing bead prevents radon and cold air from flowing inwards, and the sealing bead prevents dirt and moisture from migrating from the inside to the outside.

The first seal S1 and the second seal S2 are placed at different points on the inner surface of the bead so as to enable contact between the seals S1, S2 of the bead LF, with the first surface C1 by the first seal S1 and with the second surface C2 by the second seal S2.

In an embodiment, both surfaces C1 and C2 may be walls, in which case the sealing bead L would be a vertical bead in the corner C. In another embodiment, the surface C1 is a floor and the surface C2 is a wall, in which case the sealing bead would be a floor moulding, such as a skirting. In yet another embodiment, the surface C1 is a ceiling and the surface C2 is a wall, in which case the sealing bead would be a cornice strip.

The material of the bead frame LF of the sealing bead L may be for instance MDF or wood. The seals S1, S2 may be made for instance of extruded sealing strip, and the material of the seals S1, S2 may be for instance silicone or EPDM rubber.

The seals S1, S2 comprise a bending-enhancing weakening point WP1, WP2, and the bead frame LF on its inner surface comprises space reservations A1, A2 for the bending of seal parts SP1, SP2 of the seals S1, S2. The seal parts SP1, SP2 are arranged to be bendable into their space reservation A1, A2, against the inner surface of the bead frame LF, so as to form a first and a second sealing line SL1, SL2 between the seal part S1, S2 and the sealing bead L. This can be seen most clearly by comparing Figures 3 to 7, wherein in Figures 4 to 7 the seal parts of the seals S1, S2 are bent, i.e. turned, against the inner surface of the sealing bead L, particularly against the edge of the space reservation A1, A2 in the inner surface, on the inner surface of the bead. The seal parts SP1, SP2 bend because the sealing bead has at its both inner sides been pressed against the target, i.e. against the surfaces C1, C2 of the corner, in which case the seals S1, S2, particularly the seal parts SP1, SP2 of the seals and/or their wings W1, W2, have met the surfaces C1, C2 and, upon further pressing the sealing bead L towards the corner, the seal parts SP1, SP2 bend, assisted by the bending weakenings.

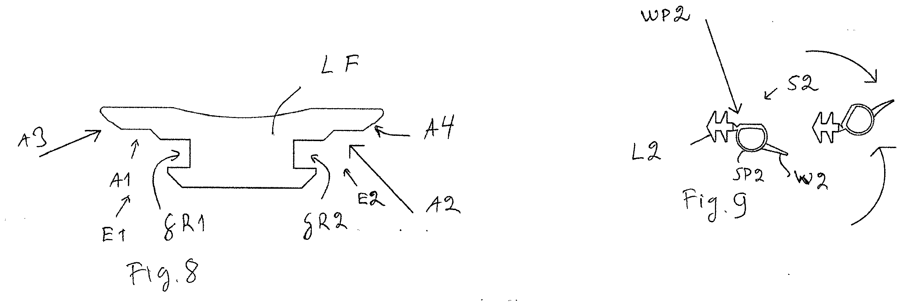

In an embodiment, the seal, such as the seals S1, S2, comprises a seal part SP1, SP2 and, as its extension, a fastening leg L1, L2 for fastening the seal to a groove GR1, GR2 provided in the bead frame LF. The weakening point WP1, WP2 enhancing the bending of the seal part SP1, SP2 resides between the seal part SP1, SP2 and the fastening leg L1, L2. In an embodiment, the seal parts SP1, SP2 are hollow, flexible channels having an at least partly roundish diameter, forming a circle. The grooves GR1, GR2 for fastening the seals are most clearly shown in Figure 8.

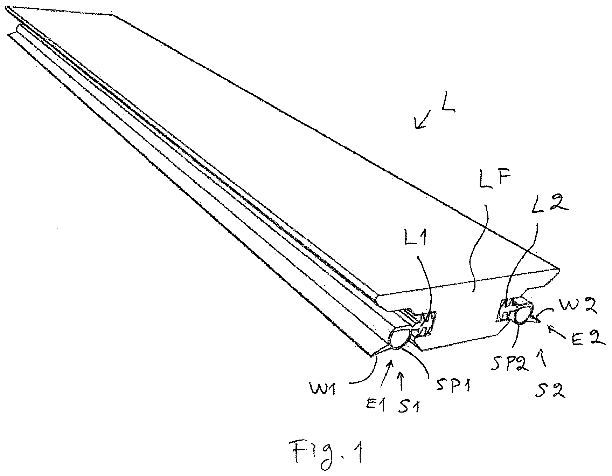

The structure of the bead L is such that both edges of the bead frame LF may be provided with a similar seal but installed in a mirror image fashion, i.e. in Figures 1, 3 to 7 the seal S1 of the left-hand edge points to the left while the seal S2 of the right-hand edge points to the right. It can be seen in Figure 3 that when free, the wings of the seal are oriented obliquely downwards with respect to the transverse line of the bead L; this is to make it easier for the seals S1, S2 to achieve a bending contact with the surfaces C1, C2.

In an embodiment, the sealing bead L is such that the weakening point WP1, WP2 enhancing the bending of the seal part SP1, SP2 is a narrowing point in the seal. Referring to Figure 9 in particular, the narrowing point resides at an upper end of the leg L1, L2 of the seal, where the seal part SP1, SP2 begins.

The seals S1, S2 comprise wing parts W1, W2, i.e. kind of peaks W1, W2 arranged to be bendable together with the seal part SP1, SP2 against the inner surface of the bead frame LF so as to form a third and a fourth sealing line SL3, SL4, now between the wing part of the seal S1, S2 and the inner surface of the sealing bead L. It is seen that in a preferred embodiment, those wing parts (W1, W2) of the seals reside closer to longitudinal outer edges of the bead than the seal parts SP1, SP2 of the seal do, i.e. the wing parts W1, W2 are thus placed farther outward than the seal parts SP1, SP2. As to the bending and the mutual influence of the seal parts SP1, SP2 and the wing parts W1, W2 of the seal, on the basis of Figures 3 to 4 it can be stated that since the wing parts W1, W2 of the seals protrude sidewards, they are the first parts of the seals to meet the surfaces C1, C2 of the corner, so in practice what happens is that a force applied from the surfaces C1, C2 to the wing parts W1, W2 bends the seal parts SP1, SP2, and the bending is alleviated and guided by the bending weakenings WP1, WP2, i.e. the weakening points.

The wing parts W1, W2 of the seal are protrusions that begin in the seal part SP1, SP2. This enables the seal part SP1, SP2 and its wing-like protrusion W1, W2 to bend in cooperation.

Just like the space reservations A1, A2 for the seal parts SP1, SP2, the bead frame LF similarly comprises for the wing parts W1, W2 of the seals S1, S2, particularly for the tip of the wing parts, space reservations A3, A4, on its inner surface. The wing parts W1, W are arranged to be turnable, i.e. bendable, into their space reservation A3, A4, against the inner surface of the bead frame LF.

Referring to Figures 4 to 7, in the case of an ordinary rectangular inner corner C, the direction of the seals S1, S2 is at an angle of about 90 degrees with respect to one another, but the fastening grooves GR1, GR2 for the seals, instead, have a direction different than that in which the seal extends, since then it is still possible to make the bead thin as the edges of the middle area of the bead frame between the longitudinal sides of the bead L can be utilized for the grooves GR1, GR2. In accordance with the figures, in an embodiment, the fastening grooves GR1, GR2 are substantially in alignment and substantially parallel when viewed in the depth direction of the groove. The seals S1, S2 are thus in alignment with respect to the transverse direction between the longitudinal sides of the bead, substantially in the same line. The seals S1, S2 are located at different, mutually cornerwise ends E1, E2 of the bead L. The seals S1, S2 reside in middle areas of the mutually cornerwise ends E1, E2, i.e. edges, of the bead.

The seal thus comprises a seal part (SP1, SP2) and, as its extension, a fastening leg L1, L2 for fastening the seal to a groove provided in the bead frame LF. In such a case, the grooves GR1, GR2 in the bead frame LF for the fastening legs L1, L2 of the seal S1, S2 are in alignment with respect to the transverse direction between the longitudinal sides of the bead, substantially in the same line.

The seals S1, S2, particularly the wings W1, W2, are placed and dimensioned such that they remain under the outer edges of the top surface of the bead, i.e. hidden behind therein. The seals S1, S2 thus remain under a projection of the top surface of the bead, particularly in a bent position, i.e. when viewed installed, i.e. over the visible part the edges of the bead frame LF meet the surfaces C1, C2, but "hidden" between these meeting lines there are four sealing lines SL11 to SL14 between the seals S1, S2 of the bead and the surfaces C1, C2, as well as sealing lines SL1 to SL4 between the seals S1, S2 and the bead frame.

The structure of the bead is such that as an extension of the ends E1, E2 the bead defines thereunder, i.e. beneath the middle part of the bead frame LF, a space S that can be utilized for cabling, for instance. The space S is also an air space which can serve as a heat insulator.

Referring to the phases of installation shown in Figures 3 to 7, first in Figure 3 the bead is pressed at an angle of 45 degrees towards the target, i.e. the surfaces C1, C2 around the corner C. Figure 4 shows a situation wherein the seal S1, S2 contacts both surfaces C1, C2, and the seal parts SP1, SP2 have bent into their space reservations A1, A2 on the inner surface of the bead while the wings W1, W2 have bent into contact with the inner surface of the bead. In Figures 5 to 6, upon pressing the bead yet farther, the wings W1, W2 of the seals turn more and more towards the surfaces C1, C2. In Figure 7, the pressing of the bead has already advanced to a point at which the edges of the bead frame have met the surfaces C1, C2 and the ends of the wings W1, W2 reside in the space reservations A3, A4 between the inner surface of the bead frame and the surfaces C1, C2.

The sealing bead, which serves as a frame for fastening the seals, is uniform, i.e. one-piece, so the seals are attached to the same piece as that provided with the space reservations for the bending of the seal, and thus the sealing lines SL1 to SL4 are formed from the seal against the same uniform piece as that to which the seals are attached. This is completely different from the structure of document US5274972 wherein a duct piece of a two-piece structure, including its seals, is first installed in place, so the seal thus does not bend against any bead since in the bending direction nothing but air is provided as the capping to be placed on the duct part is a separate part to be installed afterwards.

The sealing arrangement implemented by means of the sealing bead comprises two mutually cornerwise fixed surfaces C1, C2 of a building, and a sealing bead between these two mutually cornerwise fixed surfaces C1, C2. As to the sealing bead and the sealing arrangement, in an embodiment the sealing bead between surfaces that meet in a cornerwise fashion is a sealing bead between two fixed structures C1, C2 of a building that meet in a cornerwise fashion, a structural pair formed by such two fixed structures of a building that meet in a cornerwise fashion being one of the following: wall-floor, wall-ceiling, wall-wall.

It is apparent to a person skilled in the art that as technology advances, the basic idea of the invention may be implemented in many different ways. The invention and its embodiments are thus not restricted to the examples described above but may vary within the scope of the claims.

## Claims

1. A sealing bead to be provided between two surfaces located cornerwise with respect to one another, the sealing bead comprising a bead frame (LF) and a first seal (S1) and a second seal (S2) fastened to the bead frame, the first and the second seals (S1, S2) being, on an inner surface of the bead, placed at different points so as to enable contact of the seals of the bead with a first surface by the first seal and with a second surface by the second seal, **characterized in that** the seals (S1, S2) comprise a bending-enhancing weakening point (WP1, WP2), and the bead frame (LF) on its inner surface comprises space reservations (A1, A2) for the bending of seal parts (SP1, SP2) of the seals (S1, S2), and that the seal parts (SP1, SP2) are arranged to be bendable into their space reservation (A1, A2), against the inner surface of the bead frame (LF) so as to form a first and a second sealing line (SL1, SL2) between the seal parts (SP1, SP2) and the inner surface of the sealing bead.

2. A sealing bead as claimed in claim 1, **characterized in that** the seal comprises a seal part (SP1, SP2) and, as its extension, a fastening leg (L1, L2) for fastening the seal to a groove provided in the bead frame, and that the weakening point for enhancing the bending of the seal part (SP1, SP2) resides between the seal part (SP1, SP2) and the fastening leg (L1, L2).

3. A sealing bead as claimed in claim 1 or 2, **characterized in that** the weakening point for enhancing the bending of the seal part (SP1, SP2) is a narrowing point in the seal.

4. A sealing bead as claimed in claim 1, **characterized in that** the seals (S1, S2) comprise wing parts (W1, W2) arranged to be bendable together with the seal part (SP1, SP2) against the inner surface of the bead frame (LF) so as to form a third and a fourth sealing line (SL3, SL4), now between the wing parts (W1, W2) of the seal and inner surface of the sealing bead.

5. A sealing bead as claimed in claim 4, **characterized in that** the wing parts (W1, W2) of the seals reside closer to longitudinal outer edges of the bead than the seal parts (SP1, SP2) of the seal do.

6. A sealing bead as claimed in claim 4 or 5, **characterized in that** the wing parts (W1, W2) of the seal are protrusions that begin in the seal part (SP1, SP2).

7. A sealing bead as claimed in claim 4, **characterized in that** for the wing parts (W1, W2) of the seals, particularly for a tip of the wing parts, the bead frame (LF) on its inner surface comprises space reservations (A3, A4), and that the wing parts (W1, W2) are arranged to be turnable into their space reservation (A3, A4), against the inner surface of the bead frame (LF).

8. A sealing bead as claimed in claim 1, **characterized in that** the seals (S1, S2) are located at different, mutually cornerwise ends (E1, E2) of the bead.

9. A sealing bead as claimed in claim 8, **characterized in that** the seals (S1, S2) are in alignment with respect to a transverse direction between the longitudinal sides of the bead, substantially in the same line.

10. A sealing bead as claimed in claim 8 or 9, **characterized in that** the seal (S1, S2) comprises a seal part (SP1, SP2) and, as its extension, a fastening leg (L1, L2) for fastening the seal (S1, S2) to a groove (GR1, GR2) provided in the bead frame (LF), and that in the bead frame (LF) the grooves (GR1, GR2) for the fastening legs of the seal are in alignment with respect to the transverse direction between the longitudinal sides of the bead, substantially in the same line.

11. A sealing bead as claimed in claim 8, **characterized in that** the seals (S1, S2) reside in middle areas of the mutually cornerwise ends (E1, E2) of the sealing bead (L).

12. A sealing bead as claimed in claim 1, **characterized in that** the sealing bead between the cornerwise surfaces is a sealing bead between two fixed structures of a building that meet in a cornerwise fashion, a structural pair formed by such two fixed structures that meet in a cornerwise fashion being one of the following: wall-floor, wall-ceiling, wall-wall.

13. A sealing arrangement, comprising two fixed surfaces of a building that are located cornerwise with respect to one another, and a sealing bead between these two fixed surfaces located cornerwise with respect to one another, the sealing bead comprising a bead frame (LF) and a first seal (S1) and a second seal (S2) fastened to the bead frame, the first and the second seals (S1, S2) being, on an inner surface of the bead, placed at different points so as to enable contact of the seals of the bead with a first surface by the first seal and with a second surface by the second seal, **characterized in that** the seals (S1, S2) comprise a bending-enhancing weakening point (WP1, WP2), and the bead frame (LF) on its inner surface comprises space reservations (A1, A2) for the bending of seal parts (SP1, SP2) of the seals (S1, S2), and that the seal parts (SP1, SP2) are arranged to be bendable into their space reservation (A1, A2), against the inner surface of the bead frame (LF) so as to form a first and a second sealing line (SL1, SL2) between the seal parts (SP1, SP2) and the inner surface of the sealing bead.

14. A sealing arrangement as claimed in claim 13, **characterized in that** the sealing bead between the cornerwise surfaces is a sealing bead between two fixed structures of a building that meet in a cornerwise fashion, a structural pair formed by such two fixed structures that meet in a cornerwise fashion being one of the following: wall-floor, wall-ceiling, wall-wall.

## Patentansprüche

1. Dichtungswulst, um zwischen zwei Flächen bereitgestellt zu werden, die eckständig in Bezug aufeinander angeordnet sind, wobei die Dichtungswulst einen Wulstrahmen (LF) und eine erste Dichtung (S1) und eine zweite Dichtung (S2), die an dem Wulstrahmen befestigt ist, umfasst, wobei die ersten und zweiten Dichtungen (S1, S2), an einer Innenfläche der Wulst, an unterschiedlichen Punkten platziert sind, um Kontakt der Dichtungen der Wulst mit einer ersten Fläche mittels der ersten Dichtung und mit einer zweiten Fläche mittels der zweiten Dichtung zu ermöglichen, **dadurch gekennzeichnet, dass** die Dichtungen (S1, S2) einen Biegungs-verstärkenden Schwächungspunkt (WP1, WP2) umfassen, und wobei der Wulstrahmen (LF) auf seiner Innenfläche Raumvorbehalte (A1, A2) zum Biegen von Dichtungsteilen (SP1, SP2) der Dichtungen (S1, S2) umfasst, und dadurch, dass die Dichtungsteile (SP1, SP2) angeordnet sind, um gegen die Innenfläche des Wulstrahmens (LF) biegbar in ihre Raumvorbehalte (A1, A2) zu sein, um ein erste und eine zweite Dichtungslinie (SL1, SL2) zwischen den Dichtungsteilen (SP1, SP2) und der Innenfläche der Dichtungswulst zu bilden.

2. Dichtungswulst nach Anspruch 1, **dadurch gekennzeichnet, dass** die Dichtung einen Dichtungsteil (SP1, SP2) umfasst und, als dessen Verlängerung, einen Befestigungsschenkel (L1, L2) zum Befestigen der Dichtung an einer Nut, die in dem Wulstrahmen bereitgestellt ist, und dadurch, dass der Schwächungspunkt zum Verstärken der Biegung des Dichtungsteils (SP1, SP2) zwischen dem Dichtungsteil (SP1, SP2) und dem Befestigungsschenkel (L1, L2) liegt.

3. Dichtungswulst nach einem der Ansprüche 1 oder 2, **dadurch gekennzeichnet, dass** der Schwächungspunkt zum Verstärken der Biegung des Dichtungsteils (SP1, SP2) ein Verengungspunkt in der Dichtung ist.

4. Dichtungswulst nach Anspruch 1, **dadurch gekennzeichnet, dass** die Dichtungen (S1, S2) Flügelteile (W1, W2) umfassen, die angeordnet sind, um zusammen mit dem Dichtungsteil (SP1, SP2) gegen die Innenfläche des Wulstrahmens (LF) biegbar zu sein, um eine dritte und eine vierte Dichtungslinie (SL3, SL4) zu bilden, nun zwischen den Flügelteilen (W1, W2) der Dichtung und der Innenfläche der Dichtungswulst.

5. Dichtungswulst nach Anspruch 4, **dadurch gekennzeichnet, dass** die Flügelteile (W1, W2) der Dichtungen näher an longitudinalen Außenkanten der Wulst liegen, als es die Dichtungsteile (SP1, SP2) der Dichtung tun.

6. Dichtungswulst nach einem der Ansprüche 4 oder 5, **dadurch gekennzeichnet, dass** die Flügelteile (W1, W2) der Dichtung Vorsprünge sind, die in dem Dichtungsteil (SP1, SP2) beginnen.

7. Dichtungswulst nach Anspruch 4, **dadurch gekennzeichnet, dass** der Wulstrahmen (LF) für die Flügelteile (W1, W2) der Dichtungen, insbesondere für eine Spitze der Flügelteile, auf seiner Innenfläche Raumvorbehalte (A3, A4) umfasst, und dadurch, dass die Flügelteile (W1, W2) angeordnet sind, um in ihre Raumvorbehalte (A3, A4) gegen die Innenfläche des Wulstrahmens (LF) gedreht zu werden.

8. Dichtungswulst nach Anspruch 1, **dadurch gekennzeichnet, dass** die Dichtungen (S1, S2) an unterschiedlichen, gegenseitig eckständigen Enden (E1, E2) der Wulst angeordnet sind.

9. Dichtungswulst nach Anspruch 8, **dadurch gekennzeichnet, dass** die Dichtungen (S1, S2) in Ausrichtung in Bezug auf eine transversale Richtung zwischen den longitudinalen Seiten der Wulst, im Wesentlichen in derselben Linie, sind.

10. Dichtungswulst nach einem der Ansprüche 8 oder 9, **dadurch gekennzeichnet, dass** die Dichtung (S1, S2) ein Dichtungsteil (SP1, SP2) umfasst und, als dessen Verlängerung, einen Befestigungsschenkel (L1, L2) zum Befestigen der Dichtung (S1, S2) an einer Nut (GR1, GR2), die in dem Wulstrahmen (LF) bereitgestellt ist, und dadurch, dass in dem Wulstrahmen (LF) die Nuten (GR1, GR2) für die Befestigungsschenkel der Dichtung in Ausrichtung in Bezug auf die transversale Richtung zwischen den longitudinalen Seiten der Wulst, im Wesentlichen in derselben Linie, sind.

11. Dichtungswulst nach Anspruch 8, **dadurch gekennzeichnet, dass** die Dichtungen (S1, S2) in Mittelbereichen von gegenseitig eckständigen Enden (E1, E2) der Dichtungswulst (L) liegen.

12. Dichtungswulst nach Anspruch 1, **dadurch gekennzeichnet, dass** die Dichtungswulst zwischen den eckständigen Flächen eine Dichtungswulst zwischen zwei fixierten Strukturen eines Gebäudes ist, die sich in einer eckständigen Weise treffen, wobei ein strukturelles Paar gebildet mittels solchen zwei fixierten Strukturen, die sich in einer eckständigen Weise treffen, eines aus den folgenden ist: Wand-Boden, Wand-Decke, Wand-Wand.

13. Dichtungsanordnung, umfassend zwei fixierte Flächen eines Gebäudes, die eckständig in Bezug aufeinander angeordnet sind, und eine Dichtungswulst zwischen diesen zwei fixierten Flächen, die eckständig in Bezug aufeinander angeordnet sind, wobei die Dichtungswulst einen Wulstrahmen (LF) und eine erste Dichtung (S1) und eine zweite Dichtung (S2) umfasst, die an dem Wulstrahmen befestigt ist, wobei die ersten und zweiten Dichtungen (S1, S2), auf einer Innenfläche der Wulst, an unterschiedlichen Punkten platziert sind, um Kontakt der Dichtungen der Wulst mit einer ersten Fläche mittels der ersten Dichtung und mit einer zweiten Fläche mittels der zweiten Dichtung zu ermöglichen, **dadurch gekennzeichnet, dass** die Dichtungen (S1, S2) einen Biegungs-verstärkenden Schwächungspunkt (WP1, WP2) umfassen, und der Wulstrahmen (LF) auf seiner Innenfläche Raumvorbehalte (A1, A2) zum Biegen der Dichtungsteile (SP1, SP2) der Dichtungen (S1, S2) umfasst, und dadurch, dass die Dichtungsteile (SP1, SP2) angeordnet sind, um gegen die Innenfläche des Wulstrahmens (LF) in ihre Raumvorbehalte (A1, A2) biegbar zu sein, um eine erste und eine zweite Dichtungslinie (SL1, SL2) zwischen den Dichtungsteilen (SP1, SP2) und der Innenfläche der Dichtungswulst zu bilden.

14. Dichtungsanordnung nach Anspruch 13, **dadurch gekennzeichnet, dass** die Dichtungswulst zwischen den eckständigen Flächen eine Dichtungswulst zwischen zwei fixierten Strukturen eines Gebäudes ist, die sich in einer eckständigen Weise treffen, wobei ein strukturelles Paar gebildet mittels solchen zwei fixierten Strukturen, die sich in einer eckständigen Weise treffen, eines aus den folgenden ist: Wand-Boden, Wand-Decke, Wand-Wand.

## Revendications

1. Bourrelet d'étanchéité à prévoir entre deux surfaces situées à angle droit l'une par rapport à l'autre, le bourrelet d'étanchéité comprenant une armature de bourrelet (LF) et un premier joint (S1) et un second joint (S2) fixés sur l'armature de bourrelet, les premier et second joints (S1, S2) étant, sur une surface interne du bourrelet, placés à des endroits différents de manière à permettre une mise en contact des joints du bourrelet avec une première surface par le premier joint et avec une seconde surface par le second joint, **caractérisé en ce que** les joints (S1, S2) comprennent un point d'affaiblissement favorisant le pliage (WP1, WP2), et l'armature de bourrelet (LF) comprend, sur sa surface interne, des réservations d'espace (A1, A2) pour le pliage de parties d'étanchéité (SP1, SP2) des joints (S1, S2), et **en ce que** les parties d'étanchéité (SP1, SP2) sont agencées pour pouvoir se replier dans leur réservation d'espace (A1, A2), contre la surface interne de l'armature de bourrelet (LF) de manière à former une première et une deuxième ligne d'étanchéité (SL1, SL2) entre les parties d'étanchéité (SP1, SP2) et la surface interne du bourrelet d'étanchéité.

2. Bourrelet d'étanchéité selon la revendication 1, **caractérisé en ce que** le joint comprend une partie d'étanchéité (SP1, SP2) et, en prolongement de celle-ci, une patte de fixation (L1, L2) pour fixer le joint à une rainure prévue dans l'armature de bourrelet, et **en ce que** le point d'affaiblissement destiné à favoriser le pliage de la partie d'étanchéité (SP1, SP2) se trouve entre la partie d'étanchéité (SP1, SP2) et la patte de fixation (L1, L2).

3. Bourrelet d'étanchéité selon les revendications 1 ou 2, **caractérisé en ce que** le point d'affaiblissement destiné à favoriser le pliage de la partie d'étanchéité (SP1, SP2) est un point de rétrécissement dans le joint.

4. Bourrelet d'étanchéité selon la revendication 1, **caractérisé en ce que** les joints (S1, S2) comprennent des parties formant aile (W1, W2) agencées pour pouvoir se replier conjointement avec la partie d'étanchéité (SP1, SP2) contre la surface interne de l'armature de bourrelet (LF) de manière à former une troisième et une quatrième ligne d'étanchéité (SL3, SL4), maintenant entre les parties formant aile (W1, W2) du joint et la surface interne du bourrelet d'étanchéité.

5. Bourrelet d'étanchéité selon la revendication 4, **caractérisé en ce que** les parties formant aile (W1, W2) des joints résident plus près des bords externes longitudinaux du bourrelet que les parties d'étanchéité (SP1, SP2) du joint.

6. Bourrelet d'étanchéité selon les revendications 4 ou 5, **caractérisé en ce que** les parties formant aile (W1, W2) du joint sont des saillies qui commencent dans la partie d'étanchéité (SP1, SP2).

7. Bourrelet d'étanchéité selon la revendication 4, **caractérisé en ce que** pour les parties formant aile (W1, W2) des joints, en particulier pour un bout des parties formant aile, l'armature de bourrelet (LF) comprend, sur sa surface interne, des réservations d'espace (A3, A4) et **en ce que** les parties formant aile (W1, W2) sont agencées de manière à pouvoir se retourner dans leur réservation d'espace (A3, A4), contre la surface interne de l'armature de bourrelet (LF).

8. Bourrelet d'étanchéité selon la revendication 1, **caractérisé en ce que** les joints (S1, S2) sont situés à des extrémités différentes, formant mutuellement un angle droit (E1, E2), du bourrelet.

9. Bourrelet d'étanchéité selon la revendication 8, **caractérisé en ce que** les joints (S1, S2) sont en alignement par rapport à une direction transversale entre les côtés longitudinaux du bourrelet, sensiblement sur la même ligne.

10. Bourrelet d'étanchéité selon les revendications 8 ou 9, **caractérisé en ce que** le joint (S1, S2) comprend une partie d'étanchéité (SP1, SP2) et, en prolongement de celle-ci, une patte de fixation (L1, L2) pour fixer le joint (S1, S2) à une rainure (GR1, GR2) prévue dans l'armature de bourrelet (LF), et **en ce que** dans l'armature de bourrelet (LF), les rainures (GR1, GR2) pour les pattes de fixation du joint sont en alignement par rapport à une direction transversale entre les côtés longitudinaux du bourrelet, sensiblement sur la même ligne.

11. Bourrelet d'étanchéité selon la revendication 8, **caractérisé en ce que** les joints (S1, S2) se trouvent dans des zones médianes des extrémités formant mutuellement un angle droit (E1, E2) du bourrelet d'étanchéité (L).

12. Bourrelet d'étanchéité selon la revendication 1, **caractérisé en ce que** le bourrelet d'étanchéité entre les surfaces formant angle droit est un bourrelet d'étanchéité entre deux structures fixes d'un bâtiment qui se rencontrent en formant un angle droit, une paire structurelle formée par ces deux structures qui se rencontrent en formant un angle droit étant l'une des suivantes : mur-sol, mur-plafond, mur-mur.

13. Agencement d'étanchéité, comprenant deux surfaces fixes d'un bâtiment qui sont situées à angle droit l'une par rapport à l'autre, et un bourrelet d'étanchéité entre ces deux surfaces fixes situées à angle droit l'une par rapport à l'autre, le bourrelet d'étanchéité comprenant une armature de bourrelet (LF) et un premier joint (S1) et un second joint (S2) fixés sur l'armature de bourrelet, les premier et second joints (S1, S2) étant, sur une surface interne du bourrelet, placés à des endroits différents de manière à permettre une mise en contact des joints du bourrelet avec une première surface par le premier joint et avec une seconde surface par le second joint, **caractérisé en ce que** les joints (S1, S2) comprennent un point d'affaiblissement favorisant le pliage (WP1, WP2), et l'armature de bourrelet (LF) comprend, sur sa surface interne, des réservations d'espace (A1, A2) pour le pliage de parties d'étanchéité (SP1, SP2) des joints (S1, S2), et **en ce que** les parties d'étanchéité (SP1, SP2) sont agencées pour pouvoir se replier dans leur réservation d'espace (A1, A2), contre la surface interne de l'armature de bourrelet (LF) de manière à former une première et une deuxième ligne d'étanchéité (SL1, SL2) entre les parties d'étanchéité (SP1, SP2) et la surface interne du bourrelet d'étanchéité.

14. Agencement d'étanchéité selon la revendication 13, **caractérisé en ce que** le bourrelet d'étanchéité entre les surfaces formant angle droit est un bourrelet d'étanchéité entre deux structures fixes d'un bâtiment qui se rencontrent en formant un angle droit, une paire structurelle formée par ces deux structures qui se rencontrent en formant un angle droit étant l'une des suivantes : mur-sol, mur-plafond, mur-mur.
